## Europäisches Patentamt
## European Patent Office
## Office européen des brevets

(19)

(11) Veröffentlichungsnummer: **0 128 397**
**B1**

(12)

# EUROPÄISCHE PATENTSCHRIFT

(45) Veröffentlichungstag der Patentschrift:
14.10.87

(21) Anmeldenummer: **84105699.7**

(22) Anmeldetag: **18.05.84**

(51) Int. Cl.⁴: **H 05 B 6/60,** H 05 B 6/54,
F 26 B 3/34

(54) **Kapazitiver Hochfrequenz-Durchlaufofen.**

(30) Priorität: 03.06.83 DE 3320226

(43) Veröffentlichungstag der Anmeldung:
19.12.84 Patentblatt 84/51

(45) Bekanntmachung des Hinweises auf die Patenterteilung:
14.10.87 Patentblatt 87/42

(84) Benannte Vertragsstaaten:
AT CH DE FR GB IT LI

(56) Entgegenhaltungen:
DE-A-1 218 087
DE-A-3 114 251

(73) Patentinhaber: Siemens Aktiengesellschaft Berlin und München, Wittelsbacherplatz 2, D-8000 München 2 (DE)

(72) Erfinder: Grassmann, Hans- Christian, Dipl.- Ing., An den Eichen 18, D-8521 Baiersdorf (DE)

## Beschreibung

Die Erfindung bezieht sich auf einen kapazitiven Hochfrequenz-Durchlaufofen, bei dem

a) oberhalb der Transportvorrichtung eine Plattenelektrode angeordnet ist,

b) unterhalb der Transportvorrichtung eine geerdete Gegenelektrode vorgesehen ist, und

c) die gegeneinander höhenverstellbaren Elektroden an einen Hochfrequenzgenerator angeschlossen sind.

Kapazitive Hochfrequenz-Durchlauföfen sind in der Regel mit Plattenelektroden ausgeführt, zwischen denen das Gut transportiert und im Querfeld, d.h. quer zur Transportrichtung, erwärmt wird (vgl. z. B. DE-A-29 41 845).

Bei einer dieser bekannten Anordnungen ist die obere Elektrode als Schürze aus Metallgeflecht ausgebildet und liegt mit ihrem Eigengewicht auf dem Trocknungsgut auf. Zur Ankopplung der elektrischen Energie dient eine plattenförmige, abstandsveränderliche Hilfselektrode (vgl. z.B. DE-B-29 41 845). Es ist ferner eine Konstruktion bekannt, bei der die über dem geerdeten und geschwindigkeitsveränderbaren Transportband liegende Hochpotentialplattenelektrode aus mehreren Teilen besteht, die gegeneinander und relativ zum Transportband einzeln verstellbar sind (vgl. DE-B-12 18 087).

Eine derartige Erwärmungsart ist z. B. für Textilspulen, Flockenmaterial oder Faserkabelgut geeignet.

Bei zu erwärmenden Gütern geringer Dicke aber relativ ggroßer Länge, wie z. B. bei Textilbahnen oder Strangmaterial, ist es andererseits vorteilhaft, eine Erwärmung im Girlandenfeld durchzuführen DE-A-3 114 251. Hierzu wird eine Elektrodenkonfiguration aus gegeneinander versetzten Elektrodenstäben unterschiedlicher elektrischer Polarität benutzt, zwischen denen sich das sogenannte Girlandenfeld, welches wesentliche Felskomponenten in Transportlängsrichtung hat, ausbreitet.

Wird z. B. in einer Fertigungsanlage im Regelfall nur eine Erwärmung mit Plattenelektroden benötigt, so ist der u.U. nur gelegentlich benutzte Streufeldofen nicht wirtschaftlich ausgenutzt und umgekehrt.

Die Aufgabe der vorliegenden Erfindung besteht darin, einen kapazitiven Universal-Durchlaufofen zu schaffen, der schnell und einfach von Querfeldbetrieb mit Plattenelektroden auf Streufeldbetrieb umstellbar ist.

Diese Aufgabe wird durch folgende Merkmale gelöst:

d) die geerdete Gegenelektrode ist durch einen Rost von geerdeten Streufeldelektroden gebildet,

e) an die Plattenelektroden ist über Isolatoren ein metallisches Tragteil mit Streufeldelektroden anhängbar, die zusammen mit den geerdeten Streufeldelektroden die für ein Girlandenfeld erforderliche Elektrodenkonfiguration bilden, und

f) die Streufeldelektroden sind über das Tragteil kapazitiv an die Plattenelektrode angekoppelt.

Auf diese Weise läßt sich der Ofen an die verschiedensten Forderungen einfach mechanisch und elektrisch anpassen. Hierbei ist es noch von Vorteil, wenn Tragteil, Streufeldelektroden und Isolatoren eine anhängefähige Baueinheit bilden.

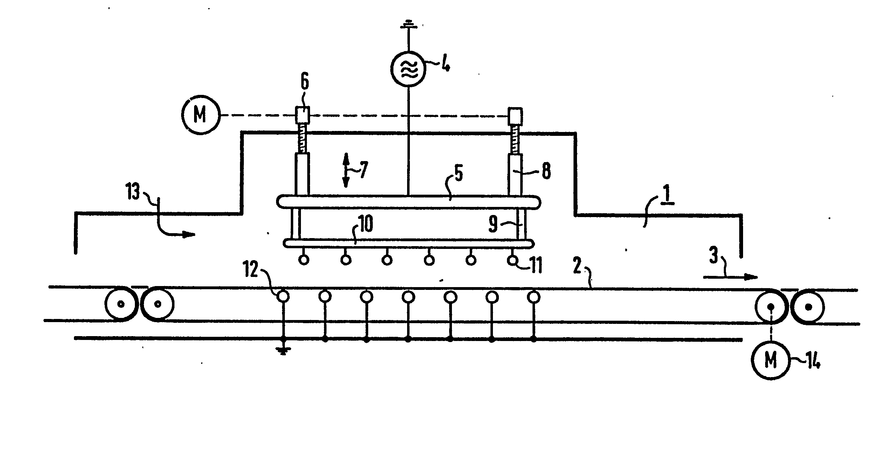

Anhand eines in der Zeichnung dargestellten Ausführungsbeispiels sei die Erfindung näher erläutert:

Das zu trocknende, nicht gezeigte Gut wird auf einem aus Kunststoff bestehenden und als Transportvorrichtung dienenden Transportband 2 in Richtung des Pfeiles 3 durch den kapazitiven Hochfrequenz-Durchlaufofen 1 geführt.

Zur Anpassung an verschiedene Betriebsbedingungen ist die Geschwindigkeit des Transportbandes 2 - wie durch den Motor 14 angedeutet - veränderbar.

Zur Trocknung im elektrischen Querfeld ist eine Plattenelektrode 5 vorgesehen - es können auch mehrere unterteilte Elektroden verwendet werden - die mit dem Hochfrequenzgenerator 4 von z. B. 30 MHz und 40 kV Spannung elektrisch verbunden ist. Die an Isolierkörpern 8 aufgehängte Plattenelektrode 5 ist in Richtung des Doppelpfeiles 7 gegenüber dem Transportband 2 durch eine mechanische Verstellvorrichtung 6 höhenverstellbar.

Die geerdete Gegenelektrode zur Plattenelektrode 5 besteht aus einem Rost von geerdeten, senkrecht zur Durchlaufrichtung angeordneten Streufeldelektroden 12, die gleichzeitig die Auflage für das Transportband 2 bilden. Da die Plattenelektrode 5 etwa 30 bis 40 cm Abstand zu den Streufeldelektroden 12 hat und die Streufeldelektroden relativ nahe beieinanderliegen können, ist die Homogenität des Querfeldes zwischen Plattenelektrode und Gegenelektrode praktisch kaum beeinträchtigt. In einem solchen Ofen, d.h. ohne die Teile 9 bis 11, können daher zum Beispiel Spulen in bekannter Weise kapazitiv getrocknet werden. Der Trocknungseffekt wird dabei noch dadurch unterstützt, daß Heißluft 13 in den Ofen eingeblasen wird, die gegebenenfalls durch das Trockengut und das als Siebband ausgebildete Transportband wieder abgesaugt wird.

Taucht jetzt die Forderung nach einer Erwärmung im kapazitiven Girlandenfeld mit Streufeldelektroden auf, kann durch ein einfaches Zusatzbauteil der Ofen 1 umgerüstet werden. Dieses Zusatzbauteil besteht aus einem Tragteil in Form einer Metallplatte 10, an der Streufeldelektroden 11 aufgehängt sind. Diese Tragplatte 10 samt den mit ihr elektrisch verbundenen Streufeldelektroden 11 ist mittels Isolatoren 9 parallel an die Plattenelektrode 5 derart anhängbar, daß sich aus den einzelnen Streufeldelektroden 11 und 12 die für ein Girlandenfeld erforderliche Streufeld-Elektrodenkonfiguration ergibt. Die Abstände zwischen den beiden Gruppen der Elektroden 11 und 12 betragen dann nur noch etwa 1 bis 10 cm.

Die Ankopplung der elektrischen Hochfrequenzenergie an die Streufeldelektroden 11 geschieht kapazitiv, und zwar über die Kapazität zwischen Tragplatte 10 und Plattenelektrode 5. Durch die kapazitive Spannungateilung wird gleichzeitig die Hochfrequenzspannung auf einfache Weise auf die für das Girlandenfeld erforderlichen Werte zwischen 5 und 10 kV herabgesetzt. Ist der Abstand zwischen Tragplatte 10 und Plattenelektrode 5 betriebsmäßig veränderbar, so läßt sich auch entsprechend die Leistung verändern.

**Patentansprüche**

1. Kapazitiver Hochfrequenz-Durchlaufofen, bei dem
   a) oberhalb der Transportvorrichtung eine Plattenelektrode angeordnet ist,
   b) unterhalb der Transportvorrichtung eine geerdete Gegenelektrode vorgesehen ist, und
   c) die gegeneinander höhenverstellbaren Elektroden an einen Hochfrequenzgenerator angeschloasen sind,
   gekennzeichnet durch folgende Merkmale:
   d) die geerdete Gegenelektrode ist durch einen Rost von geerdeten Streufeldelektroden (12) gebildet,
   e) an die Plattenelektrode (5) ist über Isolatoren (9) ein metallisches Tragteil (10) mit Streufeldelektroden (11) anhängbar, die zusammen mit den geerdeten Streufeldelektroden (12) die für ein Girlandenfeld erforderliche Elektrodenkonfiguration bilden, und
   f) die Streufeldelektroden (11) sind über das Tragteil (10) kapazitiv an die Plattenelektrode (5) angekoppelt.

2. Kapazitiver Hochfrequenz-Durchlaufofen, dadurch gekennzeichnet, daß Tragteil (10), Streufeldelektroden (11) und Isolatoren (9) eine anhängefähige Baueinheit bilden.

3. Kapazitiver Hochfrequenz-Durchlaufofen nach Anspruch 1, dadurch gekennzeichnet, daß das Tragteil (10) als Platte ausgebildet ist.

4. Kapazitiver Hochfrequenz-Durchleufofen nach Anspruch 1, dadurch gekennzeichnet, daß die Geschwindigkeit der Transportvorrichtung (2) veränderbar ist.

5. Kapazitiver Hochfrequenz-Durchlaufofen nach Anspruch 1, dadurch gekennzeichnet, daß der Abstand zwischen Tragteil (10) und Plattenelektrode (5) veränderbar ist.

**Claims**

1. A continuous high-frequency dielectric heating furnace, in which
   a) a plate electrode is arranged above the transport device,
   b) an earthed counter-electrode is arranged below the transport device and
   c) the electrodes, which can be adjusted in height in relation to one another, are connected to a high-frequency generator, characterised by the following features:
   d) the earthed counter-electrode is formed by a grid of earthed leakage field electrodes (12),
   e) a metal carrier member (10) having leakage field electrodes (11) can be attached through insulators (9) to the plate electrode (5), the leakage field electrodes (11), together with the earthed, leakage field electrodes (12), forming the electrode configuration required for a garland field, and
   f) the leakage field electrodes (11) are capacitively coupled to the plate electrode (5) through the carrier member (10).

2. A continuous high-frequency dielectric heating furnace, characterised in that carrier member (10), the leakage field electrodes (11) and the insulators (9) form a unit capable of being suspended.

3. A continuous high-frequency dielectric heating furnace as claimed in Claim 1, characterised in that the carrier member (10) is in the form of a plate.

4 A continuous high-frequency dielectric heating furnace as claimed in Claim 1, characterised in that the speed of the transport device (2) can be varied.

5. A continuous high-frequency dielectric heating furnace as claimed in Claim 1, characterised in that the distance between the carrier member (10) and the plate electrode (5) can be varied.

**Revendications**

1. Four de chauffage capacitif à haute fréquence et à mouvement continu du matériau, dans lequel
   a) une électrode en forme de plaque est disposée au-dessus du dispositif de transport,
   b) une contre-électrode mise à la terre est prévue en-dessous du dispositif de transport, et
   c) les électrodes, qui sont réglables en hauteur l'une par rapport à l'autre, sont raccordées à un générateur de haute fréquence,
   remarquable par les caractéristiques suivantes:
   d) la contre-électrode qui est mise à la terre est formée par une grille d'électrodes donnant un champ de dispersion (12) qui sont mises à la terre.
   e) sur l'électrode en forme de plaque (5) peut être suspendue par des isolateurs (9) une pièce porteuse (10) métallique ayant des électrodes donnant un champ de dispersion (11) et formant, avec les électrodes donnant un champ de dispersion (12) qui sont mises à la terre, la configuration d'électrodes qui est nécessaire pour un champ en festons et

f) les électrodes donnant un champ de dispersion (11) sont couplées capacitivement par l'intermédiaire de la pièce porteuse (10) à l'électrode en forme de plaque (5).

2. Four de chauffage capacitif à haute fréquence et à mouvement continu du matériau suivant la revendication 1, caractérisé en ce que la pièce porteuse (10), les électrodes donnant un champ de dispersion (11) et les isolateurs (9) forment une unité susceptible d'être suspendue.

3. Four de chauffage capacitif à haute fréquence et à mouvement continu du matériau suivant la revendication 1, caractérisé en ce que la pièce porteuse (10) affecte la forme d'une plaque.

4. Four de chauffage capacitif à haute fréquence et à mouvement continu du matériau suivant la revendication 1, caractérisé en ce que la vitesse du dispositif de transport (2) peut être modifiée.

5. Four de chauffage capacitif à haute fréquence et à mouvement continu du matériau suivant la revendication 1, caractérisé en ce que la distance entre la pièce porteuse (10) et l'électrode en forme de plaque (5) peut être modifiée.